# EUROPÄISCHE PATENTANMELDUNG

(11) **EP 1 134 139 A2**
(43) Veröffentlichungstag der Anmeldung: **19.09.2001**
(21) Anmeldenummer: 01105740.3
(22) Anmeldetag: 08.03.2001
(51) Int. Cl.: B60T 8/18

(54) **Pneumatisch angesteuertes, lastabhängiges Bremsdruckregelventil für Bremsanlagen in Fahrzeugen**

(30) Priorität: 17.03.2000 DE 10013155
(71) Anmelder: Haldex Brake Products GmbH, 69123 Heidelberg (DE)
(72) Erfinder: Schell, Günter, 69181 Leimen (DE); Burmester, Hermann, 69115 Heidelberg (DE)
(74) Vertreter: Patentanwälte Rehberg + Hüppe

(57) **Zusammenfassung**

Ein pneumatisch angesteuertes automatisch lastabhängiges Bremsdruckregelventil (1) für Bremsanlagen in Fahrzeugen, ist mit einem vom lastabhängigen Druck beaufschlagten und im Gehäuse (2) des Bremsdruckregelventils (1) verschiebbar geführten Stellkolben (22) versehen, der über eine Schrägfläche (50) eine Steuerstange (11) im Regelteil (5) des Bremsdruckregelventils (1) lastabhängig verstellt. Der Stellkolben (22) ist auf einer in ihrer Vorspannung einstellbaren Regelfeder (30) abgestützt. Es ist eine an der Regelfeder (30) angreifende Gewindemutter (16) vorgesehen, mit der die genutzte Federlänge der Regelfeder (30) einstellbar ist. Zur Einstellung der Vorspannung der Regelfeder (30) ist eine an der Gewindemutter (16) angreifende Gewindespindel (34) vorgesehen. Die Gewindemutter (16) ist über ein längsgeschlitztes und die Gewindespindel (34) umgebendes Verdrehrohr (20) relativ zu der Gewindespindel (34) und der Regelfeder (30) verdrehbar. Die Gewindespindel (34) einerseits und das Verdrehrohr (20) andererseits ist aus dem Gehäuse (2) herausragend mit je einem einen Drehangriff ermöglichenden Fortsatz (41, 35) versehen. Zwischen Gehäuse (2) und Verdrehrohr (20) ist eine erste lösbare, die Relativverdrehung sichernde Kupplung (38, 39) und zwischen Verdrehrohr (20) und Gewindespindel (34) eine zweite lösbare, die Relativverdrehung sichernde Kupplung (45, 46) vorgesehen.

## Beschreibung

Die Erfindung betrifft ein pneumatisch angesteuertes automatisch lastabhängiges Bremsdruckregelventil für Bremsanlagen in Fahrzeugen, mit einem vom lastabhängigen Druck beaufschlagten und im Gehäuse des Bremsdruckregelventils verschiebbar geführten Stellkolben, der über eine Schrägfläche eine Steuerstange im Regelteil des Bremsdruckregelventils lastabhängig verstellt, wobei der Stellkolben auf einer in ihrer Vorspannung einstellbaren Regelfeder abgestützt ist und eine an der Regelfeder angreifende Gewindemutter vorgesehen ist, mit der die genutzte Federlänge der Regelfeder einstellbar ist. Solche Bremsdruckregelventile werden in luftgefederten oder mit einem hydraulischen Achsausgleich versehenen Fahrzeugen eingesetzt, um den ausgesteuerten Bremsdruck zu modulieren und automatisch an unterschiedliche Beladungen des Fahrzeuges anzupassen. Solche Bremsdruckregelventile oder Bremskraftregler sind in verschiedenen Bauarten bekannt. In Verbindung mit luftgefederten Fahrzeugen werden pneumatisch ansteuerbare Bremsdruckregelventile eingesetzt, die als typische Elemente einen Stellkolben mit Schrägfläche aufweisen, der einerseits vom Balgdruck der Luftfederbälge beaufschlagt wird und sich andererseits an der Regelfeder abstützt. Zur Einstellung eines solchen Bremsdruckregelventils auf die Fahrzeuggegebenheiten ist es erforderlich, die wirksamen Federlänge der Regelfeder einstellbar zu machen, also den R-Wert der Regelfeder (Federrate) und damit die Federkennlinie zu verändern. Eine zweite Einstellnotwendigkeit betrifft die Vorspannung der Regelfeder, und zwar bezogen auf die jeweils genutzte Federlänge. In der Regel besitzen pneumatisch ansteuerbare Bremsdruckregelventile eine dritte Einstellmöglichkeit, die sich auf den ausgesteuerten Bremsdruck bei leerem Fahrzeug bezieht, die also den Leerbremsdruck festlegt. Diese dritte Einstellmöglichkeit wird in der Regel durch einen verstellbaren Anschlag erzielt, der die Verschieblichkeit des Stellkolbens begrenzt und damit die Lage der Schrägfläche bei nicht beladenem Fahrzeug relativ zur Steuerstange des Regelteils des Bremsdruckregelventils bestimmt.

Bremsdruckregelventile der eingangs beschriebenen Art sind aus der DE-OS 29 17 073 oder auch der EP 0 058 413 A1 bekannt. Sie besitzen den üblichen Regelteil mit einem Stern- oder Fächerkolben und können in durchsteuernder oder in Relaisbauart verwirklicht werden. Der Regelteil weist eine hohle Steuerstange auf, die an ihrem oberen Ende einen Auslaßventilsitz trägt, der mit einem Doppelventilkörper im Regelteil des Bremsdruckregelventils zusammenarbeitet und dessen Lage die Abschlußstellungen bestimmt. Am unteren Teil der Steuerstange ist eine Rolle angeordnet, die mit einer Schrägfläche zusammenarbeitet. Die Schrägfläche wird von einem Stellkolben quer zur Achse der Steuerstange bewegt und überträgt somit unter entsprechender Übersetzung die Bewegungen des Stellkolbens auf die Steuerstange. Die Schrägfläche kann direkt auf dem Stellkolben angeordnet sein oder auf einem mit diesem verbundenen oder an diesem anliegenden Teil, so daß jedenfalls sichergestellt ist, daß sich die Schrägfläche entsprechend den Bewegungen des Stellkolbens bewegt. Der Stellkolben, der bei zweikreisiger Ausführung z.B. als Tandemkolben ausgebildet ist, wird auf der einen Seite vom Balgdruck der Luftfederbälge der Federanlage des betreffenden Fahrzeuges bzw. der Achse beaufschlagt. Er stützt sich auf der anderen Seite auf einer Regelfeder ab, die im Gehäuse des Bremsdruckregelventils gelagert ist. Das eine Ende der Regelfeder liegt an dem Stellkolben bzw. an einem dort gebildeten Federauflager auf. Das andere Federauflager wird von einer Gewindemutter gebildet, die in die Windungen der Regelfeder einschraubbar ist. Die Gewindemutter besitzt einen Schlitz, mit dem sie von außen her mit einem Verdrehwerkzeug, beispielsweise einem Schraubendreher, relativ zur Regelfeder verdreht werden kann. Die Regelfeder ist an ihrem dem Stellkolben abgekehrten Ende verdrehgesichert gelagert, so daß es damit möglich ist, die Gewindemutter mehr oder weniger in die Regelfeder hinein oder aus der Regelfeder heraus zu verdrehen. Damit wird die Federkennlinie verändert. Es ändert sich die genutzte Federlänge zwischen Gewindemutter und Stellkolben. Außerdem läßt sich die genutzte eingestellte Federlänge der Regelfeder in der Vorspannung einstellen. Zu diesem Zweck ist ein Verstellrohr vorgesehen, welches mit einem Gewinde im Gehäuse des Bremsdruckregelventils gelagert ist. Über dieses Gewinde kann das Verstellrohr mehr oder weniger weit in das Gehäuse hinein- oder aus diesem herausgeschraubt werden. Damit wird ein Anschlag eingestellt, auf dem sich die Gewindemutter unter Vorspannung abstützt. Die eingestellte Lage muß über eine Kontermutter gesichert werden. Für die Relativlage zwischen Gewindemutter und Regelfeder ist keine Sicherung vorgesehen. Hier wirkt nur die Reibung zwischen diesen beiden Teilen.

Bei solchen Bremsdruckregelventilen ist somit die Einstellung der genutzten Federlänge einerseits und die Einstellung der Vorspannung der Regelfeder möglich. Bei dieser Einstellung muß die Konterung gelöst und am Ende der Einstellung wieder herbeigeführt werden. Vielfach ist es auch erforderlich, die Regelfeder gegen eine andere Regelfeder auszutauschen, um den gesamten gewünschten Verstellbereich nutzen zu können. Es besteht die Gefahr, daß das Kontern des Verstellrohres nach dem Einstellen der Vorspannung vergessen wird. Dann kann sich die Vorspannung beim Einwirken von Stößen und Schwingungen während des Fahrbetriebes verändern. Gefährliche Bremsdruckveränderungen können die Folge sein. Gleiches gilt für die Einstellung der genutzten Federlänge. Da die Gewindemutter an der Regelfeder nur durch Reibung gehalten ist, können sich auch hier während des Fahrbetriebes ungewünschte Veränderungen der Einstellung ergeben, die sich ebenfalls in unerwünschten Bremsdruckveränderungen äußern.

Der Erfindung liegt die Aufgabe zugrunde, ein Bremsdruckregelventil der eingangs beschriebenen Art aufzuzeigen, bei dem die Federkennlinie einerseits und die Vorspannung der Regelfeder andererseits getrennt voneinander einstellbar sind und beide Einstellungen nach Beendigung der Einstellvorgänge automatisch gesichert sind.

Erfindungsgemäß wird dies bei einem Bremsdruckregelventil der eingangs beschriebenen Art dadurch erreicht, daß zur Einstellung der Vorspannung der Regelfeder eine an der Gewindemutter angreifende Gewindespindel vorgesehen ist, daß die Gewindemutter über ein längsgeschlitztes und die Gewindespindel umgebendes Verdrehrohr relativ zu der Gewindespindel und der Regelfeder verdrehbar ist, daß die Gewindespindel einerseits und das Verdrehrohr andererseits aus dem Gehäuse herausragend mit je einem einen Drehangriff ermöglichenden Fortsatz versehen sind, und daß zwischen Gehäuse und Verdrehrohr eine erste lösbare, die Relativverdrehung sichernde Kupplung und zwischen Verdrehrohr und Gewindespindel eine zweite lösbare, die Relativverdrehung sichernde Kupplung vorgesehen ist.

Die Erfindung geht zunächst davon aus, zur Einstellung der Vorspannung der Regelfeder eine Gewindespindel vorzusehen, die sich mit ihrer wesentlichen Länge längs und innerhalb der Regelfeder erstreckt und die aber mit einem Fortsatz aus dem Gehäuse des Bremsdruckregelventils herausragt, so daß sie direkt von außen verdreht werden kann. Die Gewindespindel besitzt ein Außengewinde, und die Gewindemutter weist ein entsprechendes Innengewinde auf. Die Gewinde können als grobe Trapezgewinde mit Spiel ausgebildet sein. Als zweites Verstellelement ist ein Verdrehrohr vorgesehen, welches im Gehäuse des Bremsdruckregelventils verdrehbar gelagert ist und mit einem Fortsatz ebenfalls aus dem Gehäuse herausreicht. Die Gewindespindel ist in dem Verdrehrohr gelagert. Die herausreichenden Fortsätze von Gewindespindel und Verdrehrohr überlappen sich axial so, daß jedes der beiden Teile unabhängig von dem jeweils anderen außen mit einem Verdrehwerkzeug erfaßt und verdreht werden kann, wobei es also möglich ist, das eine Teil festzuhalten und das andere relativ zu verdrehen und umgekehrt. Das Verdrehrohr ist über die Länge der Regelfeder geschlitzt, wobei es zweckmäßig ist, durch die Schlitze mindestens zwei gabelförmige Arme zu erzeugen, die durch Durchbrechungen in der Gewindemutter hindurchreichen, so daß zwischen dem Verdrehrohr und der Gewindemutter zwar eine verdrehgesicherte Verbindung, jedoch eine Längsverschieblichkeit gegeben ist. Ein Drehen des Verdrehrohres führt also dazu, daß auch die Gewindemutter gedreht wird, wobei diese dann eine Axialbewegung ausführt, und zwar relativ zur Regelfeder. Wenn die Gewindespindel dabei festgehalten wird, also an einer Verdrehung gehindert wird, führt das Verdrehen des Verdrehrohres auch dazu, daß die Gewindemutter auf der stillstehenden Gewindespindel verdreht wird. Um diese Möglichkeit zu eröffnen, müssen die Steigungen der Gewinde an der Gewindespindel, an der Gewindemutter und des Drahtes der Regelfeder zumindest in etwa übereinstimmen. Auf diese Weise ist die Federkennlinie, also die Anzahl der wirksamen Federwindungen, einstellbar, während die Vorspannung - oder genauer der Vorspannweg - der Regelfeder während dieses Einstellvorganges zumindest in etwa konstant bleibt. Unter dem Begriff "Vorspannweg" wird der Weg der Zusammendrückung der Regelfeder aus der entspannten Stellung heraus verstanden. Unabhängig bzw. getrennt von der Federkennlinie ist der Vorspannweg der Regelfeder einstellbar, wobei also die Federkennlinie konstant bleibt. Bei diesem Einstellvorgang wird zweckmäßig nur die zweite Kupplung ausgerückt. Das Verdrehrohr wird jedenfalls verdrehgesichert gehalten, entweder passiv durch die nicht ausgerückte erste Kupplung oder durch aktives Festhalten des Verdrehrohres bei ausgerückter erster Kupplung. Durch Verdrehen der Gewindespindel allein gegenüber der Einheit aus Gewindemutter und Regelfeder wandert die Gewindemutter rein axial und verändert die Zusammendrückung des vorher festgelegten Teils der Regelfeder zwischen Gewindemutter und Stellkolben. Beim Verdrehen der Gewindespindel relativ zur Gewindemutter ändert sich nur der Vorspannweg. Um eine automatische Sicherung der eingestellten Stellungen herbeizuführen, sind die beiden Kupplungen vorgesehen. Es handelt sich um lösbare Kupplungen, die also ausgerückt werden können, um die jeweilige Relativverdrehung zuzulassen. Zum Einrücken der Kupplungen in die verriegelte Stellung wird die Regelfeder herangezogen, so daß diese eine weitere Funktion erfüllt. Da die Regelfeder immer unter Vorspannung stehend eingestellt wird, ist sichergestellt, daß die Kupplungen am Ende einer Einstellverdrehung ihre gekuppelte Stellung von selbst bzw. automatisch durch Loslassen der Fortsätze einnehmen. Die erste Kupplung ist zwischen Gehäuse und Verdrehrohr vorgesehen. Sie ermöglicht bzw. verhindert eine Relativverdrehung des Verdrehrohres gegenüber dem Gehäuse. Die zweite Kupplung ist zwischen dem Verdrehrohr und der Gewindespindel vorgesehen. Sie verhindert bzw. ermöglicht eine Verdrehung zwischen Verdrehrohr und Gewindespindel. Damit ist sichergestellt, daß sich in der gekuppelten verriegelten Stellung beider Kupplungen sowohl die Gewindespindel wie auch das Verdrehrohr am Gehäuse abstützen, also vom Gehäuse verdrehgesichert gehalten werden. Andererseits ergibt sich die Möglichkeit, bei ausgerückter zweiter Kupplung nur die Gewindespindel zu verdrehen. Weiter ist es zwar möglich, nur durch Ausrücken der ersten Kupplung das Verdrehrohr und die Gewindespindel gemeinsam zu verdrehen. Diese Möglichkeit wird jedoch nicht benutzt. Schließlich kann für den Fall, daß beide Kupplungen ausgerückt sind, jede Relativverdrehung zwischen Verdrehrohr, Gewindespindel und Gehäuse erfolgen. Durch die Anordnung der beiden Kupplungen in Verbindung mit der Gewindespindel, dem Verdrehrohr und der Gewindemutter ergeben sich grundsätzlich vier Bewegungsmöglichkeiten, von denen zur Einstellung der Federkennlinie einerseits und des Vorspannweges andererseits jedoch nur drei Möglichkeiten benötigt werden bzw. genutzt werden. Damit ergeben sich für den Fachmann weitere Möglichkeiten hinsichtlich der Einstellbarkeit. Eine dieser Möglichkeiten besteht darin, an der Gewindemutter innen und außen unterschiedliche Steigungen der Gewinde zu verwirklichen. Damit können beim Verdrehen des Verdrehrohres und verdrehgesichert gehaltener Gewindespindel Schwierigkeiten entstehen, die sich in einer gegenseitigen Verspannung der Teile oder auch in einem Lösen der Regelfeder von dem Stellkolben äußern können. Diese Verstellmöglichkeit ist damit nicht sinnvoll nutzbar. Es bleiben jedoch außer der festen gekuppelten Stellung von den drei übrigen theoretisch möglichen Verstellmöglichkeiten zwei übrig, die sinnvoll eingesetzt werden können. Dabei wird der Nachteil in Kauf genommen, daß beim Einstellen der Federrate sich der Vorspannweg zwangsweise mitverstellt. Es ist also nicht möglich, in diesem Falle die Federkennlinie unter Konstanthaltung des Vorspannweges zu verstellen. Der Vorspannweg muß nach dem Einstellen der Federkennlinie korrigiert werden, wobei diese Korrektur dann unter Konstanthaltung der Einstellung der Federkennlinie möglich ist. Bei dieser zweiten aufgezeigten Möglichkeit können sich auch Schwierigkeiten beim Nachjustieren ergeben. Das zwischenzeitliche Auffinden einer reproduzierbaren Ausgangslage ist schwierig, kann aber durch einen Ausbau der Einheit aus Gewindespindel, Verdrehrohr, Gewindemutter und Regelfeder gelöst werden.

Es besteht die Möglichkeit, die erste und/oder die zweite Kupplung als Reib- oder Formschlußkupplungen auszubilden. Formschlüssig ausgebildete Kupplungen werden bevorzugt, da sie eine größere Sicherheit bieten. Dabei ergeben sich verschiedene Möglichkeiten der Ausbildung. Eine formschlüssige Kupplung kann beispielsweise als Klauenkupplung ausgebildet werden, so daß die Lösestellung nur durch eine Axialverschiebung der gekuppelten Teile relativ zueinander und zu der Regelfeder möglich wird. Formschlüssige Kupplungen können aber auch in Form von Ratschenkupplungen mit Schrägflächen o. dgl. realisiert werden, bei denen die formschlüssigen Elemente bei Überwindung einer entsprechenden Kraftschwelle überspringen bzw. überdreht werden können. Das dazu erforderliche axiale Spiel wird ohne weiteres von der Regelfeder bereitgestellt, so daß gesonderte Maßnahmen und Aufwendungen hierzu entfallen.

Die Gewindespindel und das Verdrehrohr sind im Gehäuse des Bremsdruckregelventils unabhängig voneinander verdrehbar gelagert. Durch die zwei Elemente Gewindespindel und Verdrehrohr einerseits und die zwei Kupplungen andererseits ergeben sich vier Bewegungsmöglichkeiten. Drei dieser Bewegungsmöglichkeiten werden genutzt. Damit ergibt sich eine ausreichende Anzahl an verschiedenen Bewegungsmöglichkeiten, um die verschiedenen Relativverdrehungen zueinander sowie die gesicherte verriegelte bzw. eingestellte Stellung zu ermöglichen.

Die Gewindespindel und das Verdrehrohr sind im Gehäuse auch unabhängig voneinander axial verschiebbar gelagert und von der Kraft der Regelfeder beaufschlagt, so daß es wahlweise möglich wird, die eine Kupplung unabhängig von der anderen zu lösen.

Eine besonders vorteilhafte Ausführungsform besteht darin, daß die erste und/oder die zweite Kupplung stirnverzahnt ausgebildet sind. Bei einer solchen Stirnverzahnung handelt es sich um sich radial erstreckende Zähne, die durch eine Axialbewegung der Teile zueinander außer Eingriff gebracht werden können. Solche Stirnverzahnungen lassen sich vergleichsweise einfach herstellen. Beispielsweise kann die Gewindespindel als Kunststofformteil gespritzt werden, wobei es möglich ist, die Stirnverzahnung mit der Herstellung in der Spritzform auszubilden.

Wenn die Gewindemutter auf ihrem äußeren Umfang eine gewindeartig verlaufende Vertiefungsrinne zur Aufnahme der Regelfeder aufweist, besteht die Möglichkeit, an der Regelfeder einen maximal großen Durchmesser zu verwirklichen, was wiederum einen größeren Verstellbereich der Federcharakteristik nach sich zieht. Damit ergibt sich die Möglichkeit, auf verschiedene auswechselbare Regelfedern zu verzichten und den gesamten sinnvollen Verstellbereich mit einer einzigen Regelfeder abzudecken.

Die Gewindemutter weist zweckmäßig auf ihrem inneren Umfang ein Innengewinde zum Angriff der Gewindespindel auf. Die Gewindespindel, die Gewindemutter und die Regelfeder können an ihren Gewinden oder gewindeartigen Formgebungen zumindest in etwa übereinstimmende Steigung aufweisen. Damit wird es möglich, z. B. die Gewindespindel verdrehgesichert zu halten und allein das Verdrehrohr zu drehen. Dabei verstellt sich die genutzte Federlänge, also die Anzahl der genutzten Federwindungen, während der Vorspannweg konstant bleibt. Damit ergibt sich eine besonders einfach einzustellende Anordnung.

Es erscheint aber auch möglich, die Steigungen unabhängig voneinander zu wählen, um nur die beiden Möglichkeiten zu eröffnen, entweder das Verdrehrohr und die Gewindespindel gemeinsam zu verdrehen oder aber nur die Gewindespindel relativ zu dem stillstehenden Verdrehrohr und Gehäuse zu verdrehen. Bei der Verdrehung der Einheit aus Verdrehrohr und Gewindespindel wird die Federrate und der Vorspannweg der Regelfeder zwangsweise gemeinsam verstellt, wobei die Einstellung so vorgenommen wird, daß jedenfalls die Federrate stimmt. Anschließend kann dann bei verdrehgesichertem Verdrehrohr die Gewindespindel allein gedreht werden, um bei konstant gehaltener Federrate den Vorspannweg zu korrigieren.

Die Regelfeder ist im Stellkolben und der Stellkolben im Gehäuse verdrehgesichert gelagert. Der Stellkolben muß ohnehin verdrehgesichert gelagert werden, damit die Schrägfläche ihre Relativlage zu der Steuerstange niemals verläßt. Insoweit kann der verdrehgesichert gelagerte Stellkolben auch genutzt werden, um die Regelfeder verdrehgesichert zu lagern. Das dem Stellkolben abgekehrte Ende der Regelfeder kann sich bei manchen Einstellungen durchaus vom Gehäuse lösen. Insoweit ist die verdrehgesicherte Lagerung der Regelfeder auf der dem Stellkolben zugekehrten Seite besonders sinnvoll.

Die Gewindemutter und das Verdrehrohr sind in allen Fällen so miteinander verbunden, daß sie verdrehgesichert, aber längsverschieblich zueinander sind.

Die aus dem Gehäuse herausragenden Enden des Verdrehrohres und/oder der Gewindespindel können mit einer die Lösestellung der jeweiligen Kupplung anzeigenden Markierung, Anschlag o. dgl. versehen sein. Ein solcher Anschlag kann aus einem Sprengring bestehen, der gleichzeitig den axialen Weg begrenzt, um den das betreffende Teil zur Erreichung der Lösestellung der jeweiligen Kupplung im Gehäuse axialverschieblich gelagert ist. Eine solche Ausbildung ist in Verbindung mit solchen Kupplungen sinnvoll, die zum Verdrehen eine ausgerückte Stellung durch Axialverschiebung erfordern. Bei durchdrehbaren Kupplungen nach Überwinden einer Kraftschwelle ist eine solche Ausbildung nicht erforderlich. Sie kann aber sinnvoll sein, um dem Benutzer die ordnungsgemäß eingerückten Stellungen der beiden Kupplungen anzuzeigen.

Die Erfindung wird anhand bevorzugter Ausführungsbeispiele eines Bremsdruckregelventils weiter erläutert und verdeutlicht. Es zeigen:
- Fig. 1: einen Vertikalschnitt durch ein Bremsdruckregelventil in einer ersten Ausführungsform,
- Fig. 2: einen Vertikalschnitt durch ein Bremsdruckregelventil in einer zweiten Ausführungsform, und
- Fig. 3: einen Vertikalschnitt durch das Bremsdruckregelventil nach der Linie III-III in Fig. 2.

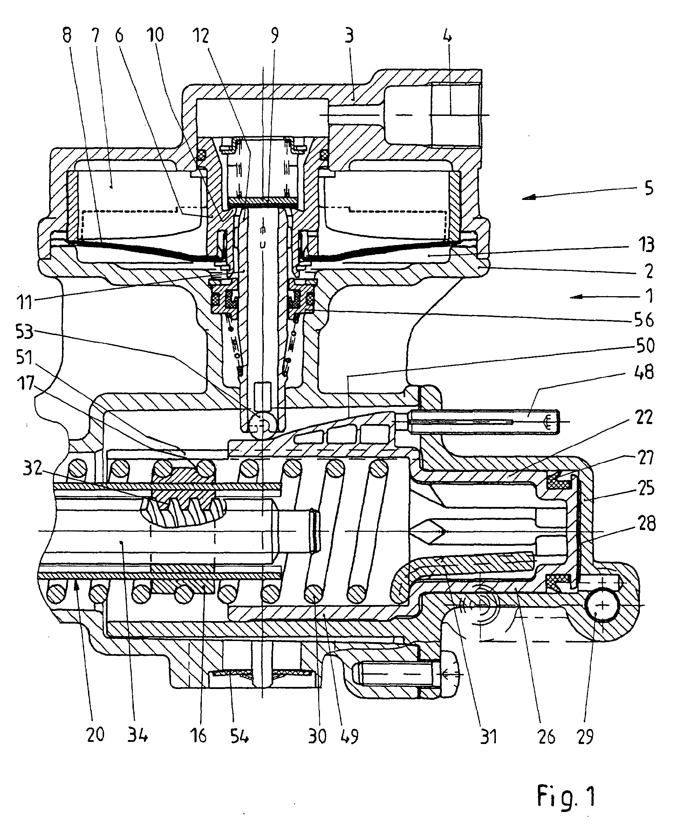

Das in Fig. 1 dargestellte Bremsdruckregelventil 1 weist ein in aller Regel mehrteiliges Gehäuse 2 auf. Im oberen Bereich ist ein Anschlußdeckel 3 vorgesehen. Der Anschlußdeckel 3 weist einen Anschluß 4 für eine (nicht dargestellte) Steuerleitung auf, die von einem Steuerventil herangeführt ist. Im oberen Bereich des Bremsdruckregelventils 1 ist in bekannter Weise ein Regelteil 5 gebildet. Wesentliche Bestandteile des Regelteils 5 sind ein Regelkolben 6, ein rippenförmiger Einsatzkörper 7 und eine zwischen Gehäuse 2 und Anschlußdeckel 3 dichtend eingespannte Membrane 8, die andererseits am Regelkolben 6 dichtend gelagert ist. Im Regelkolben 6, der hohl ausgebildet ist, ist ein Doppelventilkörper 9 federnd aufgehängt, der zusammen mit einem vorstehenden Rand 10 im Regelkolben 6 ein Einlaßventil 9, 10 bildet. Relativ zum Regelkolben 6 ist eine hohle Steuerstange 11 vorgesehen, die an ihrem oberen Ende einen Sitz 12 trägt, der zusammen mit dem Doppelventilkörper 9 ein Auslaßventil 9, 12 bildet. Der Regelteil 5 ist hier in durchsteuernder Bauart ausgebildet. Es versteht sich, daß der Regelteil 5 auch in Relaisbauart verwirklicht sein könnte.

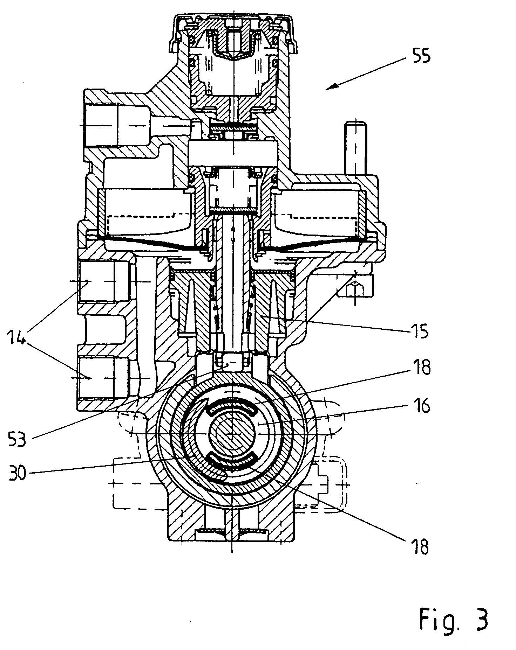

Unterhalb der Membrane 8 ist eine Bremskammer 13 gebildet, die mit einem oder mehreren Anschlüssen 14 (Fig. 3) in stetiger Verbindung steht. Von den Anschlüssen 14 führen nicht dargestellte Leitungen zu den entsprechenden Radbremsen des Fahrzeuges.

Im unteren Teil des Bremsdruckregelventils 1 bzw. des Gehäuses 2 ist die pneumatische Ansteuerung untergebracht. Es ist hier ein verschiebbar gelagerten Stellkolben 22 untergebracht. Das Gehäuse 2 besitzt einen Deckel 25, der in Form eines längsgeschlitzten Ringes relativ weit in das Gehäuse 2 hineinreichend ausgebildet ist, wie sich aus der Zusammenschau der Fig. 1 und 3 ergibt. Dieser Deckel 25 stellt eine Zylinderbohrung 26 für die gleitend verschiebbare Lagerung des Stellkolbens 22 zur Verfügung. Der Stellkolben 22 besitzt eine Kolbendichtung 27. Die Kolbendichtung 27 teilt im Deckel 25 einen Wirkraum 28 ab, der über einen Anschluß 29 in dauernder Verbindung zu den Luftfederbälgen des Fahrzeuges steht. Der Stellkolben 22 ist im Falle der einkreisigen Ansteuerung mit nur einem Wirkraum 28, wie dargestellt, versehen. Bei zweikreisiger Ansteuerung wird der Stellkolben 22 als Tandemkolben ausgebildet. Er besitzt dann zwei Wirkräume 28, die je mit einem Ansteuerkreis verbunden bzw. von dort beaufschlagt sind. Alternativ kann, auch in dem Deckel 25 integriert, ein Wechselventil vorgesehen sein, dessen zwei Eingänge mit je einem Ansteuerkreis verbunden bzw. von dort beaufschlagt sind. Der Ausgang des Wechselventils ist mit dem Wirkraum 28 verbunden.

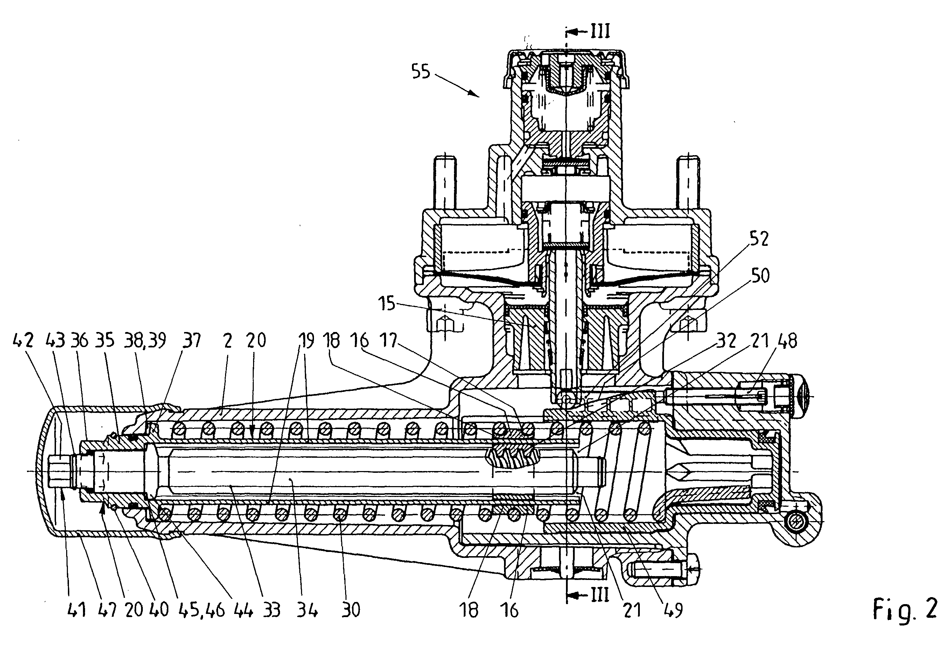

Der Stellkolben 22 stützt sich auf einer Regelfeder 30 ab, deren dem Stellkolben 22 zugekehrtes Federende 31 mit dem Stellkolben 22 verdrehgesichert verbunden ist. Das andere Ende der Regelfeder 30 ist in dem Gehäuse 2 frei beweglich untergebracht (Fig. 2). Die Regelfeder 30 ist auf einem verstellbaren Federauflager in Form einer Gewindemutter 16 abgestützt, die eine Einstellung der Federrate der Regelfeder 30 einerseits und unabhängig davon eine Einstellung des Vorspannweges der Regelfeder 30 andererseits gestattet. Die Gewindemutter 16 weist auf ihrem äußeren Umfang eine gewindeartig verlaufende Vertiefungsrinne 17 auf, deren Steigung der Steigung der Windungen der Regelfeder 30 entspricht. Damit ist erkennbar, daß die Gewindemutter 16 relativ zu der drehfest gelagerten Regelfeder 30 verdreht werden kann, also die Gewindemutter 16 je nach Drehrichtung weiter in die Regelfeder 30 hinein oder aus dieser heraus verschraubt werden kann. Dabei ändert sich die genutzte Anzahl der Windungen der Regelfeder 30 zwischen der Gewindemutter 16 und dem Stellkolben 22. Auf diese Weise wird die Federrate der Regelfeder 30 eingestellt. Während dieser Ein- bzw. Verstellung der Federrate bleibt der Vorspannweg der Regelfeder 30 unbeeinflusst, also konstant. Statt der gewindegangartigen Vertiefungsrinne 17 könnte die Gewindemutter 16 auch einen gewindegangartigen Kanal aufweisen, durch den sich die Regelfeder 30 erstreckt.

Für diese Verdrehung der Gewindemutter 16 und damit zur Einstellung der Federrate der Regelfeder 30 besitzt die Gewindemutter 16 zwei Durchbrechungen 18 (siehe auch Fig. 3), die einander gegenüberliegend über den Umfang der Gewindemutter 16 verteilt angeordnet sind. Diese Durchbrechungen 18 werden von zwei entsprechend geformten Gabeln 19 eines Verdrehrohres 20 durchsetzt. Das Verdrehrohr 20 ist ein rohrartiges Gebilde, an dem durch sich axial erstreckende Schlitze 21 die beiden Gabeln 19 gebildet sind. Damit ist zwischen dem Verdrehrohr 20 und der Gewindemutter 16 eine drehfeste Verbindung geschaffen. Wenn das Verdrehrohr 20 gedreht wird, dreht sich auch die Gewindemutter 16. Andererseits ist die axiale Verschieblichkeit zwischen Gewindemutter 16 und Verdrehrohr 20 gegeben. Wenn also die Gewindemutter 16 lediglich axial verschoben wird, wird der zwischen Gewindemutter 16 und dem Stellkolben 22 genutzte Teil der Regelfeder 30 mehr oder weniger zusammengedrückt. Damit wird der Vorspannweg der Regelfeder 30 eingestellt. Während einer solchen Einstellung bleibt die Federrate der Regelfeder 30 unbeeinflusst, also konstant.

Für eine solche reine Axialbewegung und damit Einstellung des Vorspannweges der Regelfeder 30 besitzt die Gewindemutter 16 ein Innengewinde 32. Das Innengewinde 32 ist beispielsweise als zweigängiges Trapezgewinde ausgebildet. Es arbeitet mit einem entsprechenden Außengewinde 33 auf einer Gewindespindel 34 zusammen. Das Außengewinde 33, das Innengewinde 32, die Vertiefungsrinne 17 und die Windungen der Regelfeder 30 im entspannten Zustand besitzen eine zumindest etwa übereinstimmende Steigung.

Das Verdrehrohr 20 ist, wie am besten aus Fig. 2 ersichtlich, in dem Gehäuse 2 verdrehbar gelagert. Es reicht mit einem Fortsatz 35 über das freie Ende des Gehäuses 2 hinaus. Der Fortsatz 35 ist mit einer unrunden Angriffsfläche 36 für ein Verdrehwerkzeug ausgestattet. Im Bereich der Durchdringungsstelle des Gehäuses 2 besitzt das Verdrehrohr 20 eine Schulter 37, an deren Stirnfläche eine Stirnverzahnung 38 vorgesehen ist. In Zuordnung zu den Zähnen dieser Stirnverzahnung 38 sind im Innern des Gehäuses an dieser Stelle entsprechende Zähne einer komplementären Stirnverzahnung 39 vorgesehen. Damit wird eine erste ausrückbare Kupplung 38, 39 zwischen Gehäuse 2 und Verdrehrohr 20 gebildet. Das Verdrehrohr 20 ist in dem Gehäuse 2 axial verschiebbar gelagert, so daß es möglich ist, durch entsprechendes Hineinschieben des Verdrehrohres 20 in das Gehäuse 2 die Kupplung 38, 39 auszurücken. Die Kupplung 38, 39 ist hier als Zahnkupplung oder Klauenkupplung ausgebildet. Ebenso könnte diese Kupplung 38, 39 als Reibungskupplung, als Ratschenkupplung o. dgl. ausgebildet sein. Die erste Kupplung 38, 39 wird von der Regelfeder 30 in die eingerückte Stellung beaufschlagt. Das Ausrücken dieser Kupplung 38, 39 geschieht durch eine entsprechende Gegenbewegung. Auf dem Außenumfang des Fortsatzes 35 ist eine Markierung 40, beispielsweise in Form eines Sicherungsrings, vorgesehen. Die geringfügige Distanz des Sicherungsrings 40 vom Ende des Gehäuses 2 zeigt dem Benutzer an, daß die Kupplung 38, 39 eingerückt ist. Die Markierung 40 in Form des Sicherungsrings begrenzt den Ausrückhub der Kupplung 38, 39 bzw. ist hierauf abgestimmt, so daß ein Anschlagen des Sicherungsrings am Gehäuse dem Benutzer verläßlich anzeigt, daß die ausgerückte Stellung der Kupplung 38, 39 eingenommen ist.

Die Gewindespindel 34 mit ihrem Außengewinde 33 ist innerhalb des Verdrehrohres 20 drehbar und axial verschiebbar gelagert. Die Gewindespindel 34 besitzt einen Fortsatz 41, der das freie Ende des Verdrehrohres 20 nach außen überragt und dort eine unrunde Angriffsfläche 42 für den Angriff eines Verdrehwerkzeuges aufweist. Auch hier ist in entsprechender Zuordnung zu dem freien Ende des Verdrehrohres 20 eine Markierung 43 in Form eines Sprengringes o. dgl. vorgesehen, der die Einschiebbarkeit der Gewindespindel 34 relativ zu dem Verdrehrohr 20 begrenzt.

Auch die Gewindespindel 34 weist eine Schulter 44 auf, die an ihrer Stirnseite eine Stirnverzahnung 45 trägt. In entsprechender Zuordnung ist das Verdrehrohr 20 an dieser Stelle mit einer zugeordneten Stirnverzahnung 46 versehen, so daß hier eine zweite ausrückbare Kupplung 45, 46 gebildet ist. Auch diese zweite Kupplung 45, 46 ist prinzipiell gleich wie die erste Kupplung 38, 39 ausgebildet, jedoch hier zwischen der Gewindespindel 34 und dem Verdrehrohr 20 vorgesehen. Für die Ausbildung der Kupplungen 38, 39 und 45, 46 stehen dem Fachmann verschiedene Möglichkeiten zur Verfügung, beispielsweise Klauenkupplungen, Reibungskupplungen, überrastbare Sperrkupplungen o. dgl.. Auch die eingerückte Stellung der zweiten Kupplung 45, 46 profitiert von der Wirkung der Regelfeder 30.

In Fig. 2 ist die Ausgangsstellung dargestellt, die zugleich jede eingestellte und angepaßte Stellung wiedergibt. Beide Kupplungen 38, 39 und 45, 46 befinden sich in der eingerückten Stellung, so daß sowohl das Verdrehrohr 20 wie auch die Gewindespindel 34 verdrehgesichert und in axialer Zuordnung zueinander gehalten sind. Damit befindet sich auch die Gewindemutter 16 eindeutig an definierter Stellung, durch die die Federrate und den Vorspannweg der Regelfeder 30 auf entsprechende einzelne Werte festgelegt sind. Da die Regelfeder 30 die beiden Kupplungen 38, 39 und 45, 46 in die eingerückten Stellungen hinein beaufschlagt, wird sich diese eingestellte und gesicherte Stellung, also die Ruhelage, nach jeglicher Ver- und Einstellung automatisch nach dem Loslassen der Angriffsflächen 36 und 42 ergeben.

Wenn nun das Bremsdruckregelventil 1 an ein Fahrzeug angepaßt werden soll, so müssen zwei Dinge unabhängig voneinander eingestellt und angepaßt werden, nämlich die Federrate einerseits und der Vorspannweg andererseits.

Zur unabhängigen Ein- und Verstellung der Federrate werden die beiden Kupplungen 38, 39 und 45, 46 beide ausgerückt, indem nach der Abnahme einer Schutzkappe 47 die Angriffsflächen 36 und 42 mit jeweiligen Verdrehwerkzeugen erfaßt und sowohl die Gewindespindel 34 wie auch das Verdrehrohr 20 in das Gehäuse hinein um die zugelassenen geringfügigen Hübe axial verschoben werden. Die Gewindespindel 34 wird nun mit Hilfe des eingesetzten Verdrehwerkzeuges festgehalten, d. h. an einer Verdrehung gehindert gehalten, während das Verdrehrohr 20 mit seinem Verdrehwerkzeug in einem solchen Drehsinn verdreht wird, daß die Gewindemutter 16 einerseits auf dem Außengewinde 33 der Gewindespindel 34 und gleichzeitig gegenüber den Windungen der Regelfeder 30 so verdreht wird, daß sie nach links in Richtung auf die Fortsätze 35 bzw. 41 wandert, bis sie an der Schulter 37 anstößt. Diese Zwischeneinstellung einer definierbaren Ausgangslage ist erforderlich, weil von dem Benutzer von außen nicht erkennbar ist, in welcher axialen Stellung die Gewindemutter 16 sich vor Beginn des Einstellvorgangs befunden hat. Zur Einstellung der erforderlichen Federrate entnimmt der Benutzer einer Einstellanweisung die erforderliche Anzahl der nutzbaren Windungen der Regelfeder 30 zwischen Gewindemutter 16 und Stellkolben 22, und zwar in Form von auszuführenden Umdrehungen des Verdrehrohres 20 bzw. der Gewindemutter 16 in entgegengesetzter Richtung aus der Anlagestellung an der Schulter 37 heraus.

Zur Einstellung des Vorspannweges der Regelfeder 30 wird zunächst ein Gewindestift 48 aus dem Deckel 25 herausgeschraubt, damit der Stellkolben 22 von diesem Anschlag freikommt. Anschließend wird der Leerbalgdruck eingespeist, also der für das betreffende Fahrzeug vorgesehene Balgdruck bei unbeladenem Fahrzeug auf den Stellkolben 22 gegeben. Nun wird bei eingerückter Kupplung 38, 39 oder auch bei ausgerückter Kupplung 38, 39 das Verdrehrohr 20 an einer Verdrehung gehindert und gleichzeitig bei ausgerückter Kupplung 45, 46 die Gewindespindel 34 so lange verdreht, bis sich der Leerbremsdruck einstellt. Der Leerbremsdruck ist der Bremsdruck, der konstruktiv für das betreffende Fahrzeug in unbeladenem Zustand für eine Bremsung vorgesehen ist. Auf diese Weise wird allein der Vorspannweg der Regelfeder 30 eingestellt, während dabei die vorher eingestellte Federrate der Regelfeder 30 unbeeinflußt bleibt bzw. konstant bleibt.

Durch eine diesermaßen korrekt eingestellte Federrate einerseits und einen Vorspannweg für den Leerbremsdruck andererseits ergibt sich dann aufgrund der Ausgestaltung eines Verstellgliedes 49, welches einstückig mit dem Stellkolben 22 ausgebildet sein kann, und mit Hilfe einer dort vorgesehenen Schrägfläche 50 der konstruktiv für das betreffende Fahrzeug vorgesehene Bremsdruck in voll beladenem Zustand des Fahrzeuges von selbst, wenn die Schräglage der Schrägfläche 50 hierauf abgestimmt ist. Wenn dies nicht der Fall ist, kann konstruktiv durch andere Maßnahmen Vorsorge dafür getroffen sein, um auch hier eine Einstellung vornehmen zu können. Beispielsweise kann die Neigung der Schrägfläche 50 durch geeignete Maßnahmen verändert und angepaßt werden.

Eventuell kann durch geringfügiges Nachregeln durch geringfügiges Verdrehen des Verdrehrohres 20 eine Korrektur der vorgenommenen Einstellung erfolgen, wobei es erforderlich sein kann, zwischenzeitlich eine reproduzierbare Ausgangslage einzunehmen.

Danach wird wiederum der Leerbalgdruck eingespeist und der Gewindestift 48 so weit eingedreht, bis sich seine Stirnfläche an die Stirnfläche einer Rampe anlegt, die die Schrägfläche 50 trägt. Diese Einstellung muß so vorgenommen werden, daß sich dabei der Bremsdruck nicht verändert. Mit dem Gewindestift 48 ist ein Sicherheits-Bremsdruck eingestellt, der bei Ausfall des Balgdruckes der Federbälge des Fahrzeuges dafür sorgt, daß durch die Kraft der Regelfeder 30 eine Stellung eingenommen wird, in der der Bremsdruck des unbeladenen Fahrzeuges zur Verfügung steht. Damit ist sichergestellt, daß der Leerbremsdruck als Mindestbremsdruck auch in diesem Falle zur Verfügung steht.

Das Verstellglied 49 ist mit dem Stellkolben 22 verbunden. Auch das Verstellglied 49 ist etwa ring- oder kolbenförmig ausgebildet. Es kann als getrenntes Bauteil hergestellt und mit dem Stellkolben 22 verbunden sein. In besonders einfacher Ausführungsform sind der Stellkolben 22 und das Verstellglied 49 als einstückiger Kunststofformkörper hergestellt. Der Deckel 25 weist in seinem in das Gehäuse 2 hineinreichenden Endbereich einen Schlitz 51 auf. Durch diesen Schlitz 51 des Deckels 25 ragt ein Vorsprung 52 (Fig. 2). Der Vorsprung 52 durchsetzt auch eine Durchbrechung im Gehäuse 2 in Richtung auf den Regelteil 5. Damit ist das Verstellglied 49 und damit auch der Stellkolben 22 verdrehgesichert im Gehäuse 2 gelagert. Der Vorsprung 52 ist symmetrisch zu einer Ebene durch die Mittelachse des Bremsdruckregelventils 1 (Fig. 3) ausgebildet. Er trägt Anlageflächen, die im Falle der formschlüssigen Ausbildung mit einer Verzahnung versehen sind. Diese Anlageflächen stellen die Gegenanlagefläche zu Anlageflächen des Blockierkolbens 15 dar. Damit wird erkennbar, daß bei auftretendem Druck in der Bremskammer 13 der Blockierkolben 15 in den Bewegungsweg des Stellkolbens 22 bzw. des Verstellgliedes 49 einfährt und der Stellkolben 22 an einer Bewegung in Richtung der Achse der Regelfeder 30 bzw. des Stellkolbens 22 gehindert ist. Die Achsen und damit die Bewegungsrichtungen des Stellkolbens 22 und des Blockierkolbens 15 verlaufen rechtwinklig zueinander.

Im mittleren Bereich des Vorsprungs 52 ist die Schrägfläche 50 gebildet. Die Neigung und Anordnung der Schrägfläche 50 relativ zur Steuerstange 11 ergibt eine Übersetzung der Bewegung des Stellkolbens 22 zur Bewegung der Steuerstange 11. Die Schrägfläche 50 bestimmt den ausgesteuerten Bremsdruck bei leerem Fahrzeug, bei Teilbeladungen und bei voll beladenem Fahrzeug. In den Fig. ist die Relativlage bei leerem Fahrzeug dargestellt. Um die Reibung zwischen der Schrägfläche 50 und der Steuerstange 11 gering zu halten, ist im unteren Bereich der Steuerstange 11 eine Rolle 53 gelagert.

Im unteren Bereich des Gehäuses 2 ist ein Flatterventil 54 angeordnet, durch welches die Entlüftung der Bremskammer 13 bei geöffnetem Auslaßventil 9, 12 in die Atmosphäre stattfindet.

Bei der Ausführungsform des Bremsdruckregelventils 1 gemäß den Fig. 2 und 3 ist der Blockierkolben 15 die Steuerstange 11 umgebend vorgesehen. Im oberen Bereich des Bremsdruckregelventils 1 ist ein Vorsteuerventil 55 angeordnet, um eine geknickte Kennlinie des Bremsdruckregelventils 1 zu ermöglichen. Er ist für die vorliegende Erfindung an sich ohne Belang. Es ist für die vorliegende Erfindung ebenso unbeachtlich, ob ein Blockierkolben 15 (Fig. 2 und 3) oder statt dessen eine gehäusefeste Trennwand 56 (Fig. 1) vorgesehen ist. Die ortsfest gelagerte Trennwand 56 ist mit Dichtungen versehen, um die Bremskammer 13 einerseits gehäuseseitig und andererseits gegenüber der verschiebbaren Steuerstange 11 abzudichten.

### BEZUGSZEICHENLISTE

- 1: - Bremsdruckregelventil
- 2: - Gehäuse
- 3: - Anschlußdeckel
- 4: - Anschluß
- 5: - Regelteil
- 6: - Regelkolben
- 7: - Einsatzkörper
- 8: - Membrane
- 9: - Doppelventilkörper
- 10: - Rand

- 11: - Steuerstange
- 12: - Sitz
- 13: - Bremskammer
- 14: - Anschluß
- 15: - Blockierkolben
- 16: - Gewindemutter
- 17: - Vertiefungsrinne
- 18: - Durchbrechung
- 19: - Gabel
- 20: - Verdrehrohr

- 21: - Schlitz
- 22: - Stellkolben
- 23 24 25: - Deckel
- 26: - Zylinderbohrung
- 27: - Kolbendichtung
- 28: - Wirkraum
- 29: - Anschluß
- 30: - Regelfeder

- 31: - Federende
- 32: - Innengewinde
- 33: - Außengewinde
- 34: - Gewindespindel
- 35: - Fortsatz
- 36: - Angriffsfläche
- 37: - Schulter
- 38: - Stirnverzahnung
- 39: - Stirnverzahnung
- 40: - Markierung

- 41: - Markierung
- 42: - Angriffsfläche
- 43: - Markierung
- 44: - Schulter
- 45: - Stirnverzahnung
- 46: - Stirnverzahnung
- 47: - Schutzkappe
- 48: - Gewindestift
- 49: - Verstellglied
- 50: - Schrägfläche

- 51: - Schlitz
- 52: - Vorsprung
- 53: - Rolle
- 54: - Flatterventil
- 55: - Vorsteuerventil
- 56: - Trennwand

## Patentansprüche

1. Pneumatisch angesteuertes automatisch lastabhängiges Bremsdruckregelventil (1) für Bremsanlagen in Fahrzeugen, mit einem vom lastabhängigen Druck beaufschlagten und im Gehäuse (2) des Bremsdruckregelventils (1) verschiebbar geführten Stellkolben (22), der über eine Schrägfläche (50) eine Steuerstange (11) im Regelteil (5) des Bremsdruckregelventils (1) lastabhängig verstellt, wobei der Stellkolben (22) auf einer in ihrer Vorspannung einstellbaren Regelfeder (30) abgestützt ist und eine an der Regelfeder (30) angreifende Gewindemutter (16) vorgesehen ist, mit der die genutzte Federlänge der Regelfeder (30) einstellbar ist, **dadurch gekennzeichnet**, daß zur Einstellung der Vorspannung der Regelfeder (30) eine an der Gewindemutter (16) angreifende Gewindespindel (34) vorgesehen ist, daß die Gewindemutter (16) über ein längsgeschlitztes und die Gewindespindel (34) umgebendes Verdrehrohr (20) relativ zu der Gewindespindel (34) und der Regelfeder (30) verdrehbar ist, daß die Gewindespindel (34) einerseits und das Verdrehrohr (20) andererseits aus dem Gehäuse (2) herausragend mit je einem einen Drehangriff ermöglichenden Fortsatz (41, 35) versehen sind, und daß zwischen Gehäuse (2) und Verdrehrohr (20) eine erste lösbare, die Relativverdrehung sichernde Kupplung (38, 39) und zwischen Verdrehrohr (20) und Gewindespindel (34) eine zweite lösbare, die Relativverdrehung sichernde Kupplung (45, 46) vorgesehen ist.

2. Bremsdruckregelventil nach Anspruch 1, **dadurch gekennzeichnet**, daß die erste und/oder die zweite Kupplung (38, 39; 45, 46) als Reibschlußkupplung ausgebildet ist.

3. Bremsdruckregelventil nach Anspruch 1, **dadurch gekennzeichnet**, daß die erste und/oder die zweite Kupplung (38, 39; 45, 46) als Formschlußkupplung ausgebildet ist.

4. Bremsdruckregelventil nach Anspruch 3, **dadurch gekennzeichnet**, daß die erste und/oder die zweite Kupplung (38, 39; 45, 46) stirnverzahnt ausgebildet ist.

5. Bremsdruckregelventil nach einem der vorangehenden Ansprüche, **dadurch gekennzeichnet**, daß die Gewindespindel (34) und das Verdrehrohr (20) im Gehäuse (2) unabhängig voneinander verdrehbar gelagert sind.

6. Bremsdruckregelventil nach einem der vorangehenden Ansprüche, **dadurch gekennzeichnet**, daß die Gewindespindel (34) und das Verdrehrohr (20) im Gehäuse (2) unabhängig voneinander axial verschiebbar gelagert sind und von der Kraft der Regelfeder (30) beaufschlagt sind.

7. Bremsdruckregelventil nach einem der Ansprüche 1 bis 6, **dadurch gekennzeichnet**, daß die Gewindemutter (16) auf ihrem äußeren Umfang eine gewindeartig verlaufende Vertiefungsrinne (17) zur Aufnahme der Regelfeder (30) aufweist.

8. Bremsdruckregelventil nach Anspruch 7, **dadurch gekennzeichnet**, daß die Gewindemutter (16) auf ihrem inneren Umfang ein Innengewinde (32) zum Angriff der Gewindespindel (34) aufweist und daß die Gewindespindel (34), die Gewindemutter (16) und die Regelfeder (30) an ihren Gewinden oder gewindeartigen Formgebungen zumindest in etwa übereinstimmende Steigung aufweisen.

9. Bremsdruckregelventil nach einem der Ansprüche 1 bis 8, **dadurch gekennzeichnet**, daß die Regelfeder (30) im Stellkolben (22) und der Stellkolben (22) im Gehäuse (2) verdrehgesichert gelagert sind.

10. Bremsdruckregelventil nach Anspruch 1, **dadurch gekennzeichnet**, daß die Gewindemutter (16) mit dem Verdrehrohr (20) verdrehgesichert, aber längsverschieblich verbunden ist.

11. Bremsdruckregelventil nach einem der Ansprüche 1 bis 10, **dadurch gekennzeichnet**, daß die aus dem Gehäuse (2) herausragenden Fortsätze (35, 41) des Verdrehrohres (20) und/oder der Gewindespindel (34) mit einer die Lösestellung der jeweiligen Kupplung (38, 39; 45, 46) anzeigenden Markierung (40, 43) oder einem Anschlag versehen sind.
